# EUROPÄISCHE PATENTSCHRIFT

(11) **EP 2 757 003 B1**
(45) Veröffentlichungstag und Bekanntmachung des Hinweises auf die Patenterteilung: **13.06.2018**
(21) Anmeldenummer: 13152088.4
(22) Anmeldetag: 21.01.2013
(51) Int. Cl.: B60S 3/00

(54) **Schleppvorrichtung für Kraftfahrzeuge**
Conveyer device for motor vehicles
Dispositif de convoyage pour véhicules automobiles

(43) Veröffentlichungstag der Anmeldung: 23.07.2014
(73) Patentinhaber: arwe Holding GmbH, 85356 München-Flughafen (DE)
(72) Erfinder: Gabrysch, David, 40547 Düsseldorf (DE); Peschla, Donald, 89079 Ulm (DE)
(74) Vertreter: Michalski Hüttermann & Partner Patentanwälte mbB

(56) Entgegenhaltungen:
- WO-A1-2012/057415
- DE-U1- 20 104 463
- US-A- 3 789 766
- US-A- 5 443 014

## Beschreibung

Die Erfindung betrifft eine Schleppvorrichtung für Kraftfahrzeuge, insbesondere in einer Waschanlage.

Derartige Schleppvorrichtungen dienen üblicherweise dazu, Kraftfahrzeuge mit einer vorbestimmbaren Geschwindigkeit durch eine Waschanlage zu befördern. Solche Schleppvorrichtungen weisen dabei zwei parallel angeordnete Ketten mit dazwischen befestigten Mitnehmern auf, wobei die zwischen den Ketten angeordneten Mitnehmer hinter ein Fahrzeugrad eines Kraftfahrzeuges greifen können, wodurch bei einem Kettenumlauf das Kraftfahrzeug über das Fahrzeugrad entlang einer Förderstrecke vorwärtsbewegt werden kann. Ein Schleppen des Kraftfahrzeuges erfolgt regelmäßig in einem Lasttrum der Ketten. Ein Rücklauf der Ketten und Mitnehmer kann in einem Leertrum der Ketten erfolgen, wobei der Leertrum unterhalb des Lastrums der Ketten angeordnet ist. Die Mitnehmer zum Schleppen des Kraftfahrzeuges sind fest in vorgegebenen Abständen zwischen den beiden Ketten angeordnet.

Das US Patent US 3,789,766 offenbart eine Schleppvorrichtung für Fahrzeugwaschanlagen, bei welcher Reifen-Schubrollen an einer Endloskette unterhalb des Fahrzeugweges angeordnet sind.

Das US-Patent US 5,433,014 offenbart einen Bodenförderer zum Transportieren eines mit Rädern versehenen Fahrzeugs, wobei ein Paar von Reifen des Fahrzeugs in einer geführten Spur ausgerichtet sind. Der Förderer weist einen Antriebs- und Freilaufzahnkranz auf, die voneinander beabstandet sind, sowie ein endloses Zugelement und einen Antrieb. Eine Reihe von Dolly Baugruppen sind beabstandet mit dem Zugelement befestigt.

Aufgabe der Erfindung ist es, eine Schleppvorrichtung der eingangs erwähnten Art zu schaffen, welche eine kostengünstigere Montage und eine Verringerung der Wartungs- und Reparaturkosten ermöglicht.

Die Lösung der Aufgabe erfolgt durch die Merkmale des Anspruchs 1. Vorteilhafte Ausgestaltungen sind in den Unteransprüchen angegeben.
Eine erfindungsgemäße Schleppvorrichtung für Kraftfahrzeuge, insbesondere für eine Waschanlage, mit einer zwischen einer ersten Umlenkvorrichtung mit einer ersten Rotationsachse und einer zweiten Umlenkvorrichtung mit einer zweiten Rotationsachse umlaufenden Förderkette mit einem Kettenvorlauf entlang eines Lasttrums und einem Kettenrücklauf entlang eines Leertrums, einer zumindest teilweise entlang des Lasttrums angeordneten Förderstrecke für Kraftfahrzeuge, mindestens einem, mit einem zugeordneten und an der Förderkette angeordneten Kettenschloss verbundenen Mitnehmer für einen Kraftfahrzeugreifen zum Schleppen eines Kraftfahrzeuges entlang der Förderstrecke, und einer umlaufenden Führungsbahn zum Führen des mindestens einen Mitnehmers. Erfindungsgemäß sind die erste und die zweite Rotationsachse vertikal angeordnet, wobei der Lasttrum und der Leertrum der Förderkette in einer horizontalen Ebene angeordnet sind, wobei die Schleppvorrichtung einen Felgenschutz aufweist, welcher in Form von Schutzrollen aufgestaltet ist. Mittels der Schleppvorrichtung kann ein Kraftfahrzeug über eine regelbar angetriebene Förderkette im Schlepp mittels eines Mitnehmers, welcher an einem Kraftfahrzeugreifen angreift, durch eine Waschanlage gezogen werden. Die Förderkette kann dabei horizontal umlaufend zwischen einer ersten Umlenkvorrichtung mit einer ersten Rotationsachse und einer zweiten Umlenkvorrichtung mit einer zweiten Rotationsachse angeordnet sein. Ein Kettenvorlauf ist dabei entlang eines Lasttrums der Förderkette angeordnet, und ein Kettenrücklauf ist entlang eines Leertrums der Förderkette angeordnet. Entlang zumindest eines Teils des Lasttrums ist eine Förderstrecke zum Schleppen eines oder mehrerer Kraftfahrzeuge angeordnet, entlang welcher die Kraftfahrzeuge mittels Mitnehmern, welche an einen Fahrzeugreifen des jeweiligen Kraftfahrzeuges angreifen können, in Förderrichtung geschleppt werden können. Die erste Umlenkvorrichtung kann die Förderkette horizontal, waagerecht zu einem Boden, auf dem die Schleppvorrichtung oberflurig montiert sein kann, von dem Leertrum in den Lasttrum umlenken. Die zweite Umlenkvorrichtung kann die Förderkette horizontal, waagerecht von dem Lasttrum in den Leertrum, beispielsweise am Ende der Förderstrecke, umlenken. Die Förderkette kann in Form einer Buchsenförderkette ausgebildet sein, wobei die Kettenglieder durch Nieten verbunden sein können. Die horizontal umlaufende Förderkette kann derart angeordnet sein, dass die Bolzen zur Verbindung der einzelnen Kettenglieder der Förderkette und/oder von Kettenschlössern senkrecht zu dem Boden angeordnet sind.

Die erste Umlenkvorrichtung kann in Form einer Umlenkstation mit einem Kettenspanner ausgebildet sein und die zweite Umlenkvorrichtung kann in Form einer Antriebsstation, beispielsweise mit einem regelbaren elektrischen Antrieb, welcher ein Getriebe aufweisen kann, ausgebildet sein. Ein Mitnehmer für einen Kraftfahrzeugreifen zum Schleppen eines Kraftfahrzeuges entlang der Förderstrecke kann jeweils mittels eines an der Förderkette angeordneten Kettenschlosses mit der Förderkette verbunden sein. Der Mitnehmer kann dabei mittels eines Bolzens horizontal kipp- und schwenkbar an dem jeweiligen Kettenschloss angeordnet sein. Das Kettenschloss kann an der Förderkette außenseitig angeordnet sein oder in Form eines Kettengliedes, beispielsweise durch Nieten, in die Förderkette integriert sein. Der Mitnehmer kann außenseitig an der Förderkette angeordnet sein, wobei der Mitnehmer eine Mitnehmerrolle zur Kontaktierung und Mitnahme eines Kraftfahrzeugreifens aufweisen kann, wobei die Mitnehmerrolle um eine Mitnehmerachse drehbar gelagert sein kann. Die Mitnehmerachse kann senkrecht zur ersten Rotationsachse und zur zweiten Rotationsachse angeordnet sein. Der Mitnehmer kann eine um die Mitnehmerachse drehbar gelagerte erste Laufrolle und zweite Laufrolle aufweisen, wobei die erste und die zweite Laufrolle beiderseits der Mitnehmerrolle angeordnet sein können. Der Durchmesser der Mitnehmerrolle kann geringer sein als der Durchmesser der ersten und der zweiten Laufrolle, wobei die Mitnehmerrolle unabhängig von der ersten und zweiten Laufrolle um die Mitnehmerachse drehbar gelagert sein kann. Die erste und zweite Laufrolle können beim Schleppen und Kontaktieren eines Kraftfahrzeugreifens beiderseitig des Kraftfahrzeugreifens angeordnet sein. Zum Führen des Mitnehmers kann die Schleppvorrichtung eine umlaufende Führungsbahn aufweisen, wobei der Mitnehmer eine erste und eine zweite Führungsrolle zum Kontaktieren der Führungsbahn aufweisen kann. Die erste Führungsrolle kann dabei außenseitig, auf einer der Förderkette abgewandten Seite der Führungsbahn, insbesondere im Bereich der Förderstrecke und/oder der Kettenrückführung, die Führungsbahn kontaktieren. Die zweite Führungsrolle kann die Führungsbahn innenseitig, an einer der Förderkette zugewandten Seite der Führungsbahn, insbesondere im Bereich der Förderstrecke und/oder der Kettenrückführung, kontaktieren. Die zweite Führungsrolle kann in Förderrichtung der Förderkette vor der ersten Führungsrolle angeordnet sein, wobei die erste Führungsrolle zur Abstützung der zum Schleppen des Kraftfahrzeuges benötigten Kraft auf der Führungsbahn dient. Die erste und die zweite Führungsrolle können einen unterschiedlichen Durchmesser und/oder eine unterschiedliche Dicke aufweisen, insbesondere kann die zweite Führungsrolle, welche innenseitig an der Führungsbahn angreifen kann, flacher als die erste Führungsrolle ausgebildet sein. Die zweite Führungsrolle kann dabei die Führungsbahn innenseitig in einem oberen, von dem Boden beabstandeten Bereich kontaktieren. Durch die Führungsbahn kann der Mitnehmer, beispielsweise am Ende der Förderstrecke, in einer horizontalen Ebene verschwenkt und dadurch von dem Kraftfahrzeugreifen gelöst werden. Nach dem Lösen von dem Kraftfahrzeugreifen kann der Mitnehmer durch ein horizontales Verschwenken um die zweite Rotationsachse von der Förderstrecke und dem Lasttrum in den Kettenrücklauf und den Leertrum überführt werden. Unter einer horizontalen Verschwenkung ist die Verschwenkung in einer horizontalen, waagerechten Ebene, welche im Wesentlichen parallel zum Boden ausgebildet ist, zu verstehen. Die Mitnehmerachse kann während des Verschwenkens an der ersten Umlenkvorrichtung und der zweiten Umlenkvorrichtung um die erste und die zweite Rotationsachse in derselben horizontalen Ebene verschwenkt werden.

Durch die vertikale Anordnung der ersten und der zweiten Rotationsachse, senkrecht zu dem Boden auf dem die Schleppvorrichtung oberflurig angeordnet sein kann, kann ein horizontales Überführen des Mitnehmers von dem Lasttrum in den Leertrum ermöglicht werden, wobei der Lasttrum und der Leertrum der Förderkette ebenfalls in einer horizontalen Ebene nebeneinander angeordnet sein können. Dadurch können der Kettenvorlauf und der Kettenrücklauf ebenfalls in derselben horizontalen Ebene nebeneinander angeordnet sein. Dies ermöglicht die Schleppvorrichtung oberflurig auf einem, insbesondere aussparungsfreien, Boden zu montieren, wobei keine kostenintensiven Aussparungen für den Kettenrücklauf vorgesehen werden müssen und die Schleppvorrichtung, insbesondere mit dem Leertrum der Förderkette, nicht unterflurig ausgebildet ist und zumindest teilweise in den Boden hineinragt. Durch die oberflurige Ausgestaltung der Schleppvorrichtung kann eine kostengünstige Montage direkt auf dem vorhandenen Boden ermöglicht werden, wobei durch den sehr geringen Bodenaufbau der Schleppvorrichtung eine gute Zugänglichkeit zu Bauteilen der Schleppvorrichtung und auch eine leichte Reinigung der Schleppvorrichtung ermöglicht werden kann. Zudem kann durch den geringen Bodenaufbau der Schleppvorrichtung bei einer vorgegebenen Geschosshöhe die nutzbare Geschosshöhe im Wesentlichen vollständig ausgenutzt werden. Darüber hinaus ermöglicht die gute Zugänglichkeit der Schleppvorrichtung eine vereinfachte Wartung und Reparatur, wodurch Wartungs- und Reparaturkosten gesenkt werden können.

In einer bevorzugten Ausführungsform weist die Führungsbahn eine in senkrechter Richtung ausgebildete Profilierung auf. Die Profilierung der Führungsbahn kann im Bereich der zweiten Umlenkvorrichtung, insbesondere der Antriebsstation, an der Führungsbahn ausgebildet sein. Die Profilierung kann sich dabei von einem Ende der Förderstrecke bis zu einem Beginn des Kettenrücklaufes erstrecken, und sich im Wesentlichen über einen Winkel von 180° um die zweite Rotationsachse erstrecken. Durch die Profilierung kann die vertikale Erstreckung, die Höhe, der Führungsbahn entlang eines Abschnittes der Führungsbahn über dem Boden verändert werden. Die Profilierung kann beispielsweise in Form einer Stufe ausgebildet sein, wobei von der Förderstrecke und dem Kettenvorlauf kommend die Höhe der Führungsbahn durch eine Stufe verringert werden kann und an dem Beginn des Kettenrücklaufes durch eine Stufe die Höhe der Führungsbahn wieder angehoben werden kann, beispielsweise auf die vorherige Höhe. Durch die Profilierung, insbesondere durch die Änderung der Höhe der Führungsbahn im Bereich der zweiten Umlenkvorrichtung, kann eine Führungsrolle, insbesondere die zweite Führungsrolle, des Mitnehmers kontaktfrei zu der Führungsbahn bewegt werden, und im Bereich der zweiten Umlenkvorrichtung über die Führungsbahn hinausgelenkt werden. Dadurch kann eine Kippbewegung und Verschwenkbewegung des Mitnehmers in einer horizontalen Ebene entgegen der Bewegungsrichtung der Förderkette bewirkt werden. Die Kippbewegung des Mitnehmers in der horizontalen Ebene entgegen der Bewegungsrichtung der Förderkette kann ein Lösen des Mitnehmers von dem sich weiterbewegenden Kraftfahrzeugrades bewirken, wodurch eine seitliche, nach innen gerichtete Einholbewegung des Mitnehmers ermöglicht werden kann, und der Mitnehmer kraftfrei von dem Kettenvorlauf in den Kettenrücklauf horizontal verschwenkt werden kann. Zu Beginn des Kettenrücklaufes kann die Führungsrolle, insbesondere die zweite Führungsrolle, wieder innenseitig an der Führungsbahn eingreifen, wodurch eine Führung des Mitnehmers entlang des Kettenrücklaufes gewährleistet werden kann.

In der Erfindung weist der Mitnehmer mindestens eine Stützrolle auf. Der Mitnehmer kann eine erste und eine zweite Laufrolle aufweisen, welche drehbar um eine Mitnehmerachse gelagert sein können, wobei die erste und die zweite Laufrolle beiderseits einer Mitnehmerrolle zur Kontaktierung eines Kraftfahrzeugreifens angeordnet sein können. Die mindestens eine Stützrolle kann um eine Stützrollenachse drehbar gelagert sein, wobei die Mitnehmerachse und die Stützrollenachse parallel und beabstandet zueinander angeordnet sein können. Mehrere Stützrollen können auf der Stützrollenachse angeordnet sein und/oder jeweils eigene Achsen aufweisen. Die Stützrollenachse kann an einer dem Kraftfahrzeugreifen abgewandten Seite der Mitnehmerachse angeordnet sein. Durch die Stützrolle kann der Mitnehmer in einer waagerechten Position gestützt werden, wodurch ein Kontakt des Mitnehmers, insbesondere der ersten Führungsrolle, mit dem Boden vermieden werden kann. Dadurch kann ein Verschleiß der Führungsrollen vermindert werden. Zudem kann durch die Stützrolle eine Torsion des Kettenschlosses vermieden werden.

Besonders bevorzugt weist das Kettenschloss einen Bolzen zur verschwenkbaren Lagerung des Mitnehmers und der Mitnehmer eine entsprechende Bohrung zur Aufnahme des Bolzens auf. Das Kettenschloss weist außenseitig einen Bolzen zur verschwenkbaren Lagerung des Mitnehmers auf, wobei der Mitnehmer in einer entsprechenden Bohrung des Mitnehmers dreh-bar gelagert sein kann. Der Bolzen kann lösbar außenseitig an dem Kettenschloss angeordnet sein. Die Bohrung zur Aufnahme des Bolzens an dem Mitnehmer kann zwischen der Mitnehmerachse und der Stützrollenachse angeordnet sein, wobei die Bohrung insbesondere in Förderrichtung gesehen hinter der zweiten Führungsrolle angeordnet sein kann. Durch die Anordnung des Bolzens an dem Kettenschloss kann die Konstruktion des bolzenfreien Mitnehmers vereinfacht werden. Zudem kann ein Wechseln eines Mitnehmer vereinfacht werden.

In einer besonders bevorzugten Ausgestaltungsformweist die erste und/oder zweite Umlenkvorrichtung einen Mitnehmerteller zur vertikalen Abstützung des Mitnehmers auf. Der Mitnehmerteller kann in Form einer Scheibe ausgebildet sein, und drehbar um die erste und/oder zweite Rotationsachse, beispielsweise unterhalb der Förderkette, angeordnet sein. Beim Umschwenken eines Mitnehmers, beispielsweise von dem Lasttrum in den Leertrum, kann der Mitnehmerteller durch den Mitnehmer kontaktiert werden, wodurch der Mitnehmer in senkrechter Richtung abgestützt werden kann. Dadurch kann ein bodenkontakt-freies Umlenken des Mitnehmers um die erste und/oder zweite Rotationsachse ermöglicht werden, wodurch der Verschleiß des Mitnehmers verringert werden kann. Besonders bevorzugt weist die erste Umlenkvorrichtung einen hydraulischen Kettenspanner auf. Die erste Umlenkvorrichtung kann in Form einer Umlenkstation ausgebildet sein, um ein reibungsärmeres Umlenken eines Mitnehmers von dem Kettenrücklauf in den Kettenvorlauf zu ermöglichen. Der hydraulische Kettenspanner der Umlenkvorrichtung kann dabei in Form eines druckgeregelten Hydraulikzylinders ausgebildet sein. Dadurch kann ein manuelles Spannen der Förderkette vermieden werden, und eine konstante optimale Spannung der Förderkette gewährleistet werden.

Bevorzugt weist die Förderstrecke eine Fahrbahn für Kraftfahrzeugräder und/oder einen Felgenschutz auf. Die Förderstrecke kann eine Fahrbahn für Kraftfahrzeugreifen eines Kraftfahrzeuges aufweisen. Die Fahrbahn kann dabei in Form einer Platte oder eines Profils ausgebildet sein, wobei das Profil einen oder zwei Kragen aufweisen kann. Eine Fahrbahn mit zwei Kragen kann in Form einer Wanne ausgebildet sein, welche innen und außenseitig einen Kragen aufweisen kann. Die Förderstrecke kann einen Felgenschutz zum Schutz von einer Felge eines Kraftfahrzeugreifens beim Schleppen des Kraftfahrzeuges entlang der Förderstrecke aufweisen. Der Felgenschutz kann entlang zumindest eines Teils der Förderstrecke angeordnet sein. Der Felgenschutz kann innenseitig angeordnet sein, an einer der Förderkette zugewandten Seite des Kraftfahrzeugreifens, und/oder außenseitig, an einer der Förderkette abgewandten Seite des Kraftfahrzeugreifens, angeordnet sein. Der Felgenschutz kann aus einem Material mit einer glatten Oberfläche und/oder einem niedrigen Reibungskoeffizienten hergestellt sein, wodurch ein Verkratzen einer Felge vermieden werden kann.

Bevorzugt ist vorgesehen, dass der Felgenschutz in Form von Schutzrollen ausgestaltet ist. Die Schutzrollen können eine längliche Erstreckung aufweisen und um eine Rollachse drehbar gelagert sein. Die Rollachse kann dabei im Wesentlichen parallel zur Förderstrecke und/oder dem Lasttrum der Förderkette angeordnet sein. Die Schutzrollen können an der Förderstrecke, der Fahrbahn und/oder einer Abdeckung der Schleppvorrichtung angeordnet sein. Die Rollachsen der Schutzrollen können außen- und/oder innenseitig des Kraftfahrzeugreifens jeweils im Wesentlichen koaxial angeordnet sein. Durch einen Kontakt des abrollenden Kraftfahrzeugreifens mit einer Schutzrolle, insbesondere bei einem Kontakt der Kraftfahrzeugfelge mit der Schutzrolle, kann die Schutzrolle durch eine Rotation um die Rollachse nachgeben und eine Beschädigung der Felge durch eine verminderte Relativbewegung zwischen Schutzrolle und Kraftfahrzeugreifen, insbesondere Felge, vermieden werden. Eine Schutzrolle kann aus einem Werkstoff mit einen niedrigen Reibungskoeffizienten und/oder einer glatten Oberfläche ausgebildet sein, beispielsweise aus einem Kunststoff wie Teflon.

Besonders bevorzugt sind entlang des Kettenrücklaufes für die erste und zweite Laufrolle und/oder die Stützrolle des Mitnehmers Fahrstreifen vorgesehen. Die Fahrstreifen für die erste und zweite Laufrolle und/oder die Stützrolle des Mitnehmers können in Form von Streifen oberflurig auf dem Boden montiert sein und sich im Wesentlichen parallel zur Förderkette entlang des Leertrums und der Kettenrücklaufes erstrecken. Durch die Fahrstreifen kann der Rollwiderstand der Mitnehmer in dem Kettenrücklauf verringert werden. Zudem kann der Verschleiß und mögliche Beschädigung der Mitnehmer vermieden werden.

Ferner wird eine Waschanlage mit mindestens einer wie vorstehend aus- und weitergebildete Schleppvorrichtung beansprucht.

Nachfolgend wird die Erfindung unter Bezugnahme auf die anliegenden Zeichnungen anhand eines bevorzugten Ausführungsbeispiels näher erläutert.

Es zeigen:
- Fig. 1:: eine perspektivische Darstellung einer Schleppvorrichtung;
- Fig. 2:: eine perspektivische Darstellung eines Abschnittes der Schleppvorrichtung mit einer Förderstrecke;
- Fig. 3:: eine perspektivische Darstellung einer zweiten Umlenkvorrichtung in Form einer Antriebsstation;
- Fig. 4:: eine schematische Darstellung einer ersten Umlenkvorrichtung;
- Fig. 5:: eine perspektivische Darstellung eines Kettenschlosses mit einem Bolzen;
- Fig. 6:: eine perspektivische Ansicht eines Mitnehmers mit einer ersten und einer zweiten Laufrolle;
- Fig. 7:: eine Draufsicht eines Mitnehmers mit einer Stützrolle;
- Fig. 8:: eine Seitenansicht des in Fig. 7 gezeigten Mitnehmers;
- Fig. 9:: eine perspektivische Ansicht des in Fig. 7 gezeigten Mitnehmers;
- Fig. 10:: eine perspektivische Ansicht des in Fig. 7 dargestellten Mitnehmers an einem Kettenschloss;
- Fig. 11:: eine Seitenansicht der zweiten Umlenkvorrichtung mit einer Förderstrecke und einem Kettenrücklauf;
- Fig. 12:: einen Ausschnitt aus der in Fig. 11 gezeigten zweiten Umlenkvorrichtung;
- Fig. 13:: einen Ausschnitt der in Fig. 12 gezeigten zweiten Umlenkvorrichtung mit einem Kraftfahrzeugreifen;
- Fig. 14:: eine perspektivische Darstellung der in Fig. 13 gezeigten zweiten Umlenkvorrichtung;
- Fig.: 15a-f:eine Draufsicht der zweiten Umlenkvorrichtung mit einem verschwenkten Mitnehmer;
- Fig. 16:: einen Ausschnitt einer Förderstrecke mit einer Fahrbahn;
- Fig. 17:: eine perspektivische Darstellung von Fahrstreifen des Kettenrücklaufes;
- Fig. 18:: eine perspektivische Darstellung einer Abdeckung der Schleppvorrichtung; und
- Fig. 19:: eine perspektivische Darstellung einer Abdeckung der Förderstrecke;
- Fig. 20:: eine Draufsicht einer weiteren Ausgestaltung eines Mitnehmers;
- Fig. 21:: eine perspektivische Ansicht einer weiteren Ausgestaltung eines Mitnehmers.

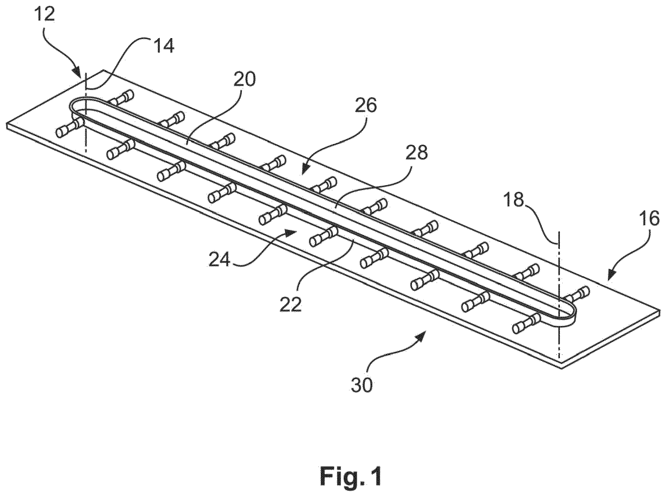

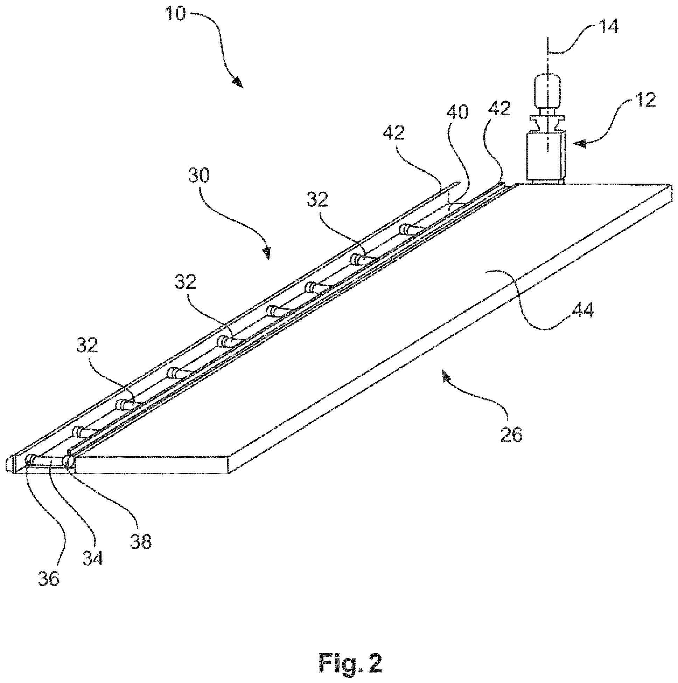

In Fig. 1 ist eine Schleppvorrichtung 10 für Kraftfahrzeuge in einer Waschanlage mit einer ersten Umlenkvorrichtung 12 mit einer ersten Rotationsachse 14 und einer zweiten Umlenkvorrichtung 16 mit einer zweiten Rotationsachse 18 dargestellt. Zwischen der ersten Umlenkvorrichtung 12 und der zweiten Umlenkvorrichtung 16 ist eine Förderkette 20 mit einem Kettenvorlauf 22 entlang eines Lasttrums 24 der Förderkette 20 und einem Kettenrücklauf 26 entlang eines Leertrums 28 der Förderkette 20 dargestellt. Entlang eines Teils des Kettevorlaufs 22 und des Lasttrums 24 ist eine Förderstrecke 30 angeordnet, entlang welcher ein Kraftfahrzeug durch eine Waschanlage geschleppt werden kann. Zum Schleppen eines Kraftfahrzeuges weist die Schleppvorrichtung 10 Mitnehmer 32 auf (Fig. 2), welche in regelmäßigen Abständen an der Förderkette (nicht dargestellt) angeordnet sind, und ein Kraftfahrzeug entlang der Förderstrecke 30 schleppen können. Die Mitnehmer 32 weisen zur Kontaktierung eines Kraftfahrzeugreifens eine Mitnehmerrolle 34 auf, die zwischen einer ersten Laufrolle 36 und einer zweiten Laufrolle 38 angeordnet ist. Die Mitnehmer 32 rollen auf einer Fahrbahn 40 ab, welche wannenförmig ausgebildet ist. Die wannenförmige Fahrbahn 40 der Förderstrecke 30 weist innenseitig und außenseitig jeweils einen Felgenschutz 42 auf, um ein Verkratzen oder Beschädigen einer Felge eines Kraftfahrzeugreifens zu vermeiden. Der Kettenrücklauf 26 und die Förderkette 20 sind mittels einer Abdeckung 44 abgedeckt und vor Verschmutzung geschützt.

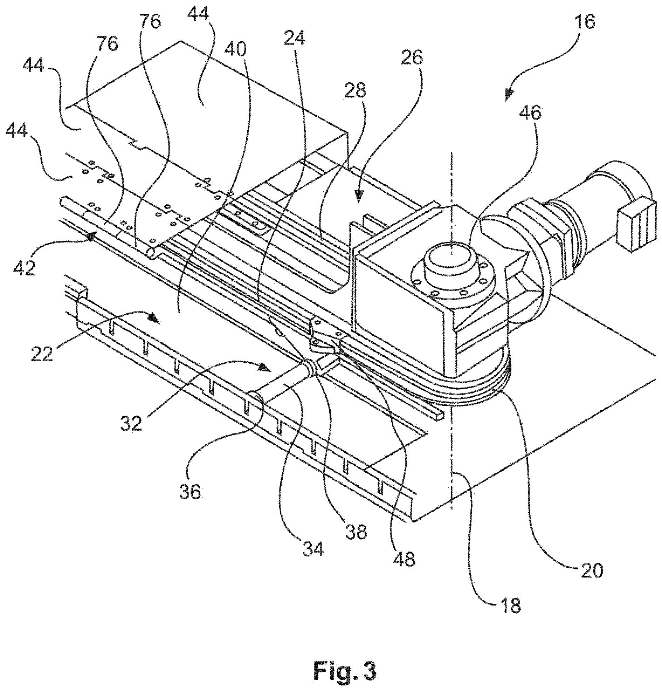

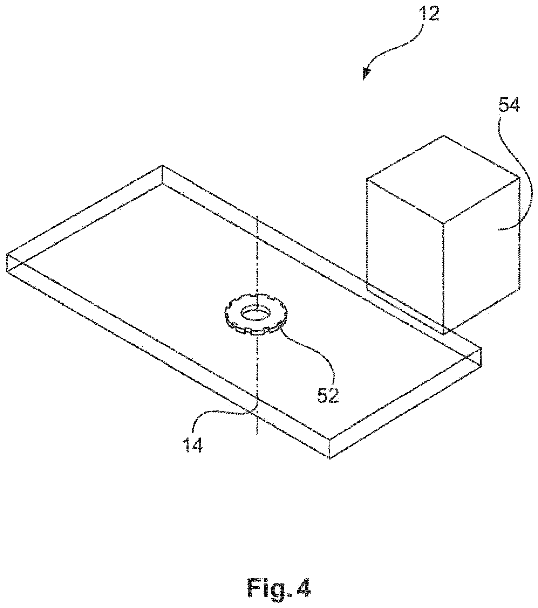

In Fig. 3 ist die zweite Umlenkvorrichtung 16 der Schleppvorrichtung 10 in Form einer Antriebsstation mit einem elektrischen Antrieb 46 dargestellt. Der Mitnehmer 32 ist an einem Kettenschloss 48 der Förderkette 20 angeordnet, sodass der Mitnehmer durch die horizontal umlaufende Förderkette 20 entlang des Kettenvorlaufs 22 mitgenommen werden kann und um die zweite Rotationsachse 18 horizontal von dem Kettenvorlauf 22 in den Kettenrücklauf 26 verschwenkt werden kann. Die horizontale Verschwenkung des Mitnehmers 32 wird durch die Anordnung des Lasttrums 24 und des Leertrums 28 der Förderkette 20 in derselben horizontalen Ebene ermöglicht. Der Mitnehmer 32 läuft entlang des Kettenvorlaufes 22 auf einer wannenförmigen Fahrbahn 40 mit der ersten und der zweiten Laufrolle 36, 38, welche zu beiden Seiten einer Mitnehmerrolle 34 angeordnet sind. Die Schleppvorrichtung 10 ist zumindest teilweise durch Abdeckungen 44 verdeckt, wobei der Kettenrücklauf 26 in seiner gesamten Breite durch die Abdeckung 44 abgedeckt ist und der Kettenvorlauf 22 entlang der Förderstrecke 30 innenseitig eine Abdeckung im Wesentlichen der Förderkette 20 aufweist, wobei an der Abdeckung außenseitig, zur Fahrbahn 40 gerichtet, ein Felgenschutz 42 angeordnet ist. Der Felgenschutz 42 ist dabei in Form von Schutzrollen 76, welche parallel zur Fahrbahn 40 und zur Förderkette 20 angeordnet sind, ausgebildet. Die zweite Umlenkvorrichtung 16 in Form einer Umlenkstation mit einem hydraulischen Kettenspanner ist in Fig. 4 dargestellt. Die erste Umlenkvorrichtung 12 weist die erste Rotationsachse 14 auf, um welche ein Umlenkkettenrad 52 drehbar gelagert ist, um die Förderkette (nicht dargestellt) von dem Kettenrücklauf in den Kettenvorlauf zu überführen. Die Umlenkvorrichtung 12 weist zudem eine Hydraulikeinheit 54 auf, um den Kettenspanner (nicht dargestellt) mit einem benötigten hydraulischen Druck zu versorgen.

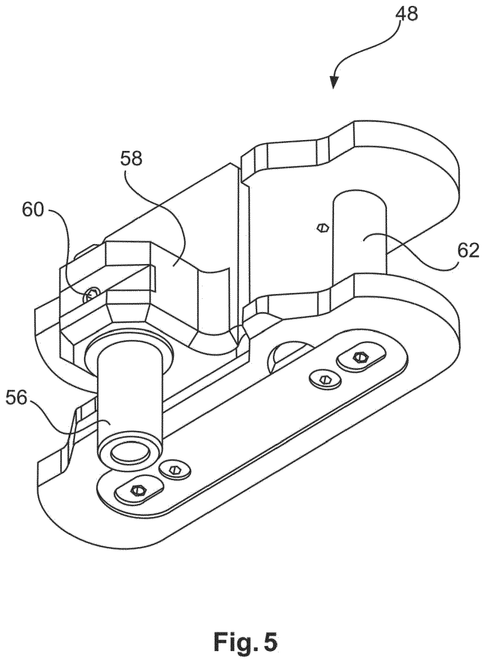

In Fig. 5 ist ein Kettenschloss 48 dargestellt, welches außenseitig einen Bolzen 56 zur Befestigung eines Mitnehmers (nicht dargestellt) aufweist. Der Bolzen 56 ist in einer Auskragung 58 aufgenommen, wobei der Bolzen 56 lösbar in der Auskragung 58 gelagert ist und über eine Sicherungsschraube 60 gegen unbeabsichtigtes Lösen gesichert ist. Über Niete 62 ist das Kettenschloss 48 mit Kettengliedern der Förderkette 20 verbindbar.

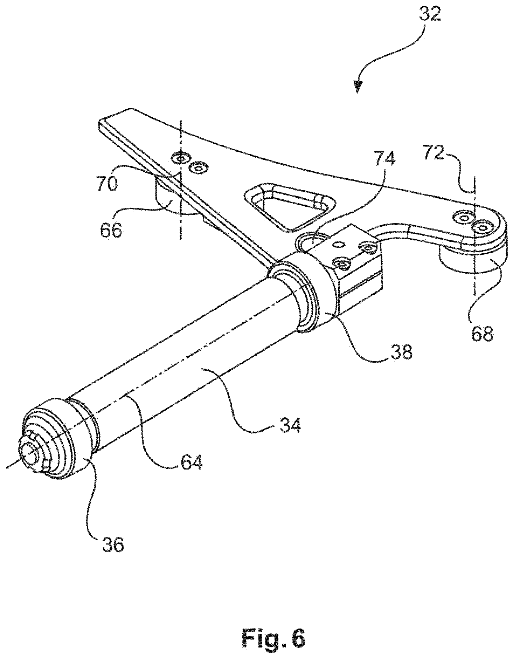

Fig. 6 zeigt einen Mitnehmer 32, welcher zum Mitnehmen eines Kraftfahrzeugreifens eine Mitnehmerrolle 34 aufweist. Die Mitnehmerrolle 34 ist um eine Mitnehmerachse 64 drehbar gelagert. An den Enden der Mitnehmerrolle 34 sind eine erste Laufrolle 36 und eine zweite Laufrolle 38 angeordnet, wobei die erste Laufrolle 36 außenseitig und die zweite Laufrolle 38 innenseitig angeordnet sind. Die erste und die zweite Laufrolle 36, 38 und die Mitnehmerrolle 34 sind unabhängig voneinander drehbar um die Mitnehmerachse 64 gelagert. Zur Führung weist der Mitnehmer eine erste Führungsrolle 66 und eine zweite Führungsrolle 68 auf. Die Führungsrollenachsen 70,72 sind im Wesentlichen senkrecht zur Mitnehmerachse 64 angeordnet. Die erste Führungsrolle 66 mit der ersten Führungsrollenachse 70 ist in Förderrichtung der Förderkette (nicht dargestellt) hinter der Mitnehmerachse 64 angeordnet, wobei die zweite Führungsrolle 68 mit der zweiten Führungsrollenachse 72 in Förderrichtung vor der Mitnehmerachse 64 angeordnet ist. Die erste Führungsrolle 66 ist dabei außenseitig einer Führungsbahn (nicht dargestellt) angeordnet und die zweite Führungsrolle 68 innenseitig der Führungsbahn. Zur Befestigung des Mitnehmers 32 an einem Kettenschloss 48 weist der Mitnehmer eine Bohrung 74 auf, in die ein Bolzen eines Kettenschlosses aufgenommen werden kann.

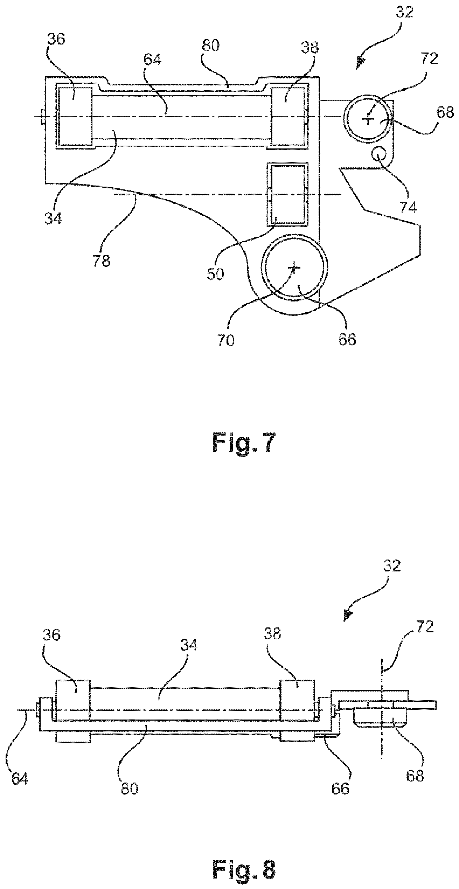

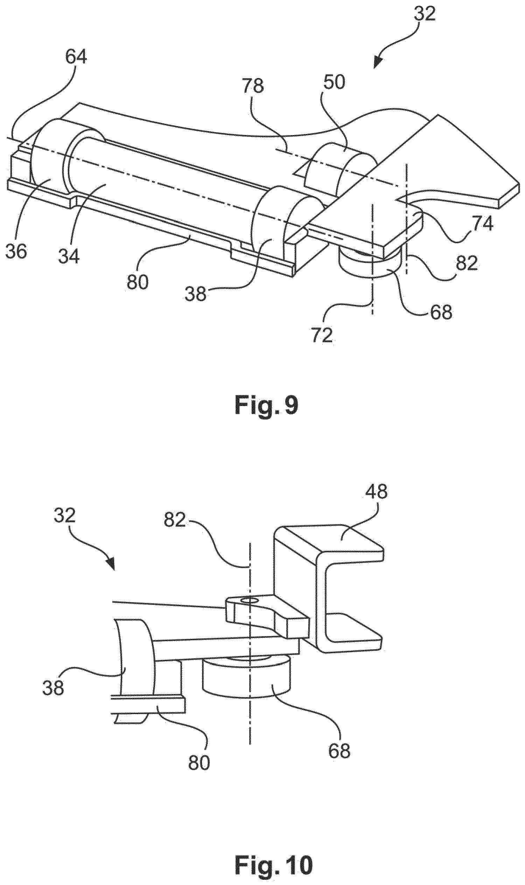

In Fig. 7 ist ein Mitnehmer 32 mit einer Stützrolle 76 dargestellt, wobei die Stützrolle 50 um eine Stützrollenachse 78 drehbar gelagert ist. Die Stützrollenachse 78 ist dabei parallel und in Förderrichtung hinter der Mitnehmerachse 64 angeordnet, wobei die Stützrolle 50 in Förderrichtung hinter der zweiten Laufrolle 38 angeordnet ist. In Förderrichtung der Förderkette (nicht dargestellt) hinter der Mitnehmerachse 64 ist die zweite Führungsrolle 68 angeordnet. Die erste Führungsrolle 66 ist in Förderrichtung hinter der Stützrollenachse 78 und der Stützrolle 50 angeordnet. Zur Befestigung des Mitnehmers 32 an einem Kettenschloss (nicht dargestellt) weist der Mitnehmer 32 eine Bohrung 74 auf. Zum Schutz der Mitnehmerrolle 32 weist der Mitnehmer 32 in Förderrichtung vor der Mitnehmerrolle 34 einen Schutzbügel 80 auf, welcher sich im Wesentlichen parallel zur Mitnehmerachse 64 entlang der ersten Laufrolle 36, der Mitnehmerrolle 34 und der zweiten Laufrolle 38 erstreckt. Der Schutzbügel 80 (Fig. 8) ist fahrbahn- oder bodenseitig unterhalb der Mitnehmerachse 64 quer zur Förderrichtung des Mitnehmers 32 angeordnet. Die innenseitig einer Förderbahn (nicht dargestellt) angeordnete zweite Führungsrolle 68 mit der zweiten Führungsrollenachse 72 ist innenseitig der ersten Führungsrolle 66 angeordnet. Die zweite Führungsrolle 68 weist einen kleineren Durchmesser auf als die erste Führungsrolle 66, und die zweite Führungsrolle 68 weist eine geringere Höhe auf im Vergleich zur ersten Führungsrolle 66. Die zweite Führungsrolle 68 weist eine flachere Ausgestaltung auf als die erste Führungsrolle 66 und ist mit einer Stirnseite weiter vom Boden beabstandet angeordnet als die erste Führungsrolle 66. Die Bohrung 74 (Fig. 9) ist benachbart zu, und in Förderrichtung hinter der zweiten Führungsrolle 68 angeordnet. Durch die achsparallel zur ersten Laufrolle 36 und zweiten Laufrolle 38 angeordnete Stützrolle 50, die in Förderrichtung hinter der zweiten Laufrolle 38 angeordnet ist, kann der Mitnehmer 32 gegen Kippmomente um die Mitnehmerachse 64 abgestützt werden. Dadurch kann ein ungewollter Kontakt mit dem Boden durch den Mitnehmer 32 vermieden werden, wodurch der Verschleiß des Mitnehmers 32 verringert werden kann. Der an dem Kettenschloss 48 (Fig. 10) angeordnete Mitnehmer 32 ist um die Bohrungsachse 82 verschwenkbar gelagert.

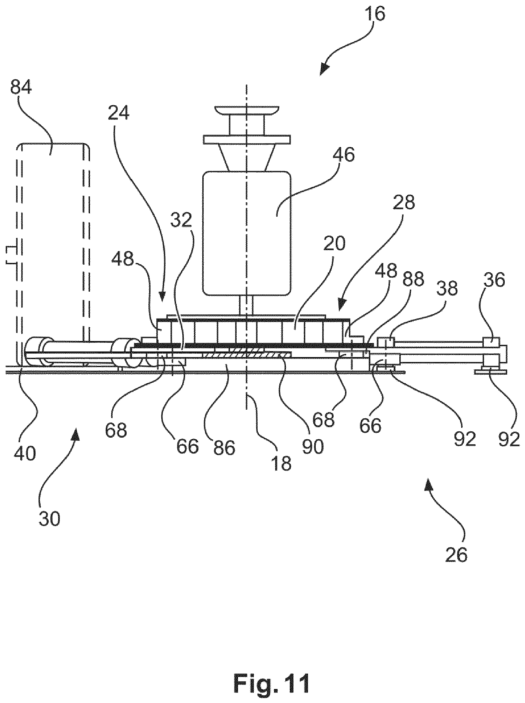

In Fig. 11 ist eine stirnseitige Ansicht der zweiten Umlenkvorrichtung 16, beispielsweise ausfahrtseitig der Förderstrecke 30, dargestellt. Die zweite Umlenkvorrichtung 16 weist die zweite Rotationsachse 18 und eine Antriebseinheit 46 auf, durch welche die Förderkette 20 bewegt werden kann, sodass über Mitnehmer 32 Kraftfahrzeuge, insbesondere über Kraftfahrzeugreifen 84, entlang der Förderstrecke 30 mitgenommen werden können, wobei die Kraftfahrzeugreifen 84 auf der Fahrbahn 40 abrollen können. Die Mitnehmer 32 sind über das Kettenschloss 48 schwenkbar mit der Förderkette 20 verbunden. Die Mitnehmer 32 werden über die erste Führungsrolle 66 und die zweite Führungsrolle 68, welche eine Führungsbahn 86 kontaktieren, geführt. Die erste Führungsrolle 66 kontaktiert die Führungsbahn 86 außenseitig, und die zweite Führungsrolle 68 kontaktiert die Führungsbahn innenseitig. Im Bereich der zweiten Umlenkvorrichtung 16 weist die Führungsbahn 86 eine Profilierung 88 in Form einer Stufe auf, wobei in einem Bereich von beispielsweise im Wesentlichen 180° um die zweite Rotationsachse 18 die Höhe der Führungsbahn 86 vermindert ist. Dadurch kann im Bereich der Profilierung 88 die zweite Führungsrolle 68 den Mitnehmer 32 nicht gegen ein Kippen entgegen der Förderrichtung um die Bohrungsachse 82 herum abstützen, wodurch die zweite Führungsrolle 68 die Führungsbahn 86 kreuzen kann, wodurch der Mitnehmer 32 entgegen der Förderrichtung verschwenken und von dem Kraftfahrzeugreifen 84 gelöst werden kann. Dadurch kann der Mitnehmer 32 kraftfrei von der Förderstrecke 30 in den Kettenrücklauf 26 verschwenkt werden. Innenseitig kontaktiert im Bereich der zweiten Umlenkvorrichtung 16 der Mitnehmer 32 einen Mitnehmerteller 90, der ein Abkippen des Mitnehmers 32 in senkrechter Richtung verhindert, wodurch ein bodenkontaktfreies Verschwenken des Mitnehmers 32 von dem Kettenvorlauf 22 in den Kettenrücklauf 26 ermöglicht werden kann. Zur Führung der Mitnehmer 32 weist der Kettenrücklauf 26 zwei Fahrstreifen 92 auf.

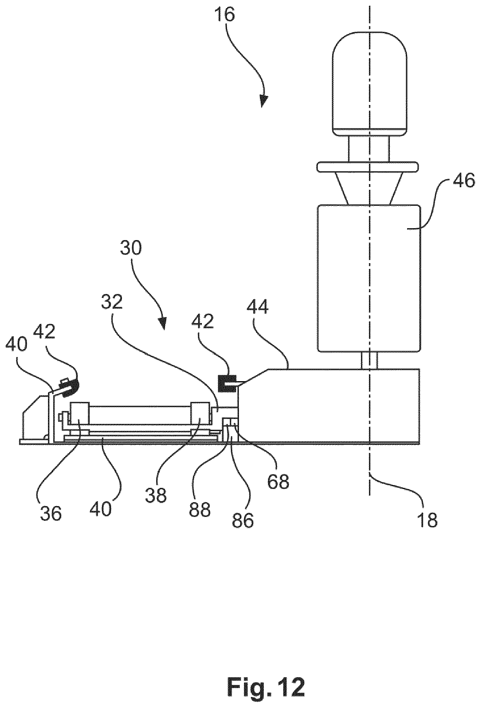

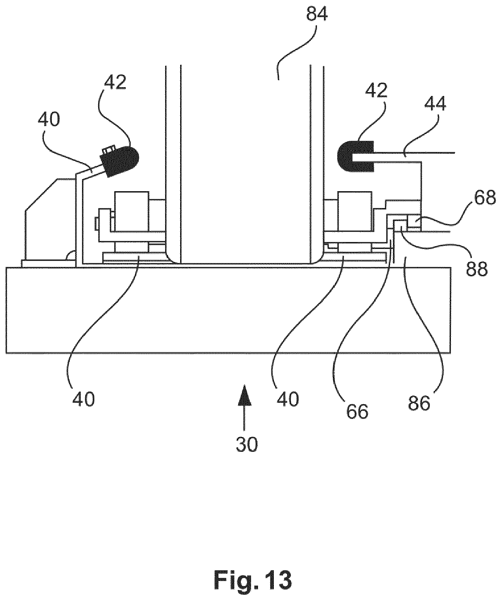

Die in Fig. 12 gezeigte zweite Umlenkvorrichtung 16 der Schleppvorrichtung 10 ist zumindest teilweise durch eine Abdeckung 44 abgedeckt. An der Abdeckung 44 ist seitens der Förderstrecke 30 ein Felgenschutz 42 angeordnet, welcher über die Förderkette hinaus bis an den Rand der Fahrbahn 40 ragt. Die Fahrbahn 40 weist außenseitig einen Rand auf, welcher ebenfalls einen nach innen gerichteten Felgenschutz 42 aufweist, und über die Außenseite des Mitnehmers 32 hinüberragt. Der Mitnehmer 32 ist an der Führungsbahn 68 geführt, welche eine Profilierung 88 in Form einer Stufe aufweist. Der Kraftfahrzeugreifen 84 (Fig. 13) wird durch den Mitnehmer 32 entlang der Förderstrecke 30 mitgeschleppt, wobei der Mitnehmer 32 gegen horizontales Verkippen entgegen der Förderrichtung über die Führungsrollen 66, 68 an der Führungsbahn 86 abgestützt ist. An der stufenförmigen Profilierung 88 der Führungsbahn 86 kann die zweite Führungsrolle 68, welche innenseitig an der Führungsbahn 86 anliegt, nicht mehr die Führungsbahn 86 kontaktieren, wodurch ein horizontales Verschwenken entgegen der Förderrichtung des Mitnehmers 32 ermöglicht werden kann.

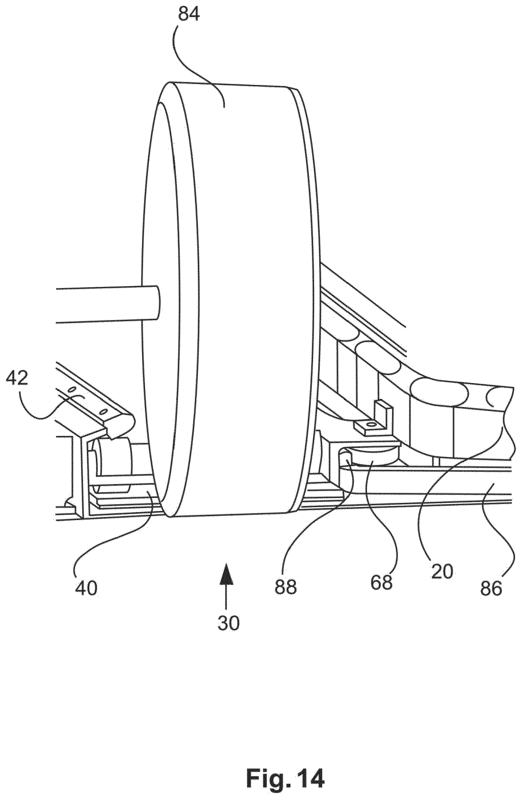

Fig. 14 zeigt einen Kraftfahrzeugreifen 84 am Ende der Förderstrecke 30, wobei die zweite Führungsrolle 68 bei einer weiteren Förderung des Mitnehmers 32 durch die Förderkette 20 nicht mehr kontaktiert und die Führungsbahn 86 überquert, wodurch ein Verschwenken des nur durch den die erste Führungsrolle 66 abgestützten Mitnehmers, welcher außenseitig an der Führungsbahn 86 anliegt, ermöglicht werden kann. Die Führungsbahn 86 ist dabei zum Verschwenken des Mitnehmers 32 nicht mehr außenseitig der Förderkette 20 angeordnet, sondern nach innen, die Förderkette 20 kreuzend, angeordnet.

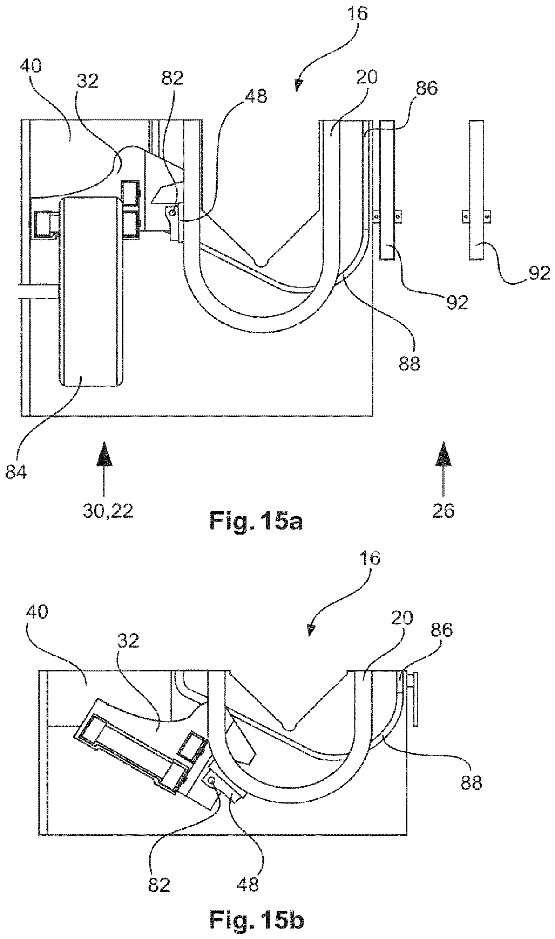

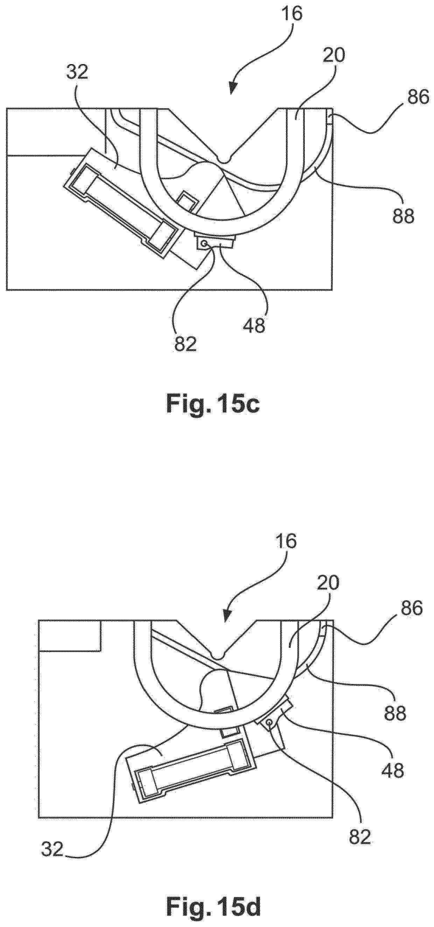

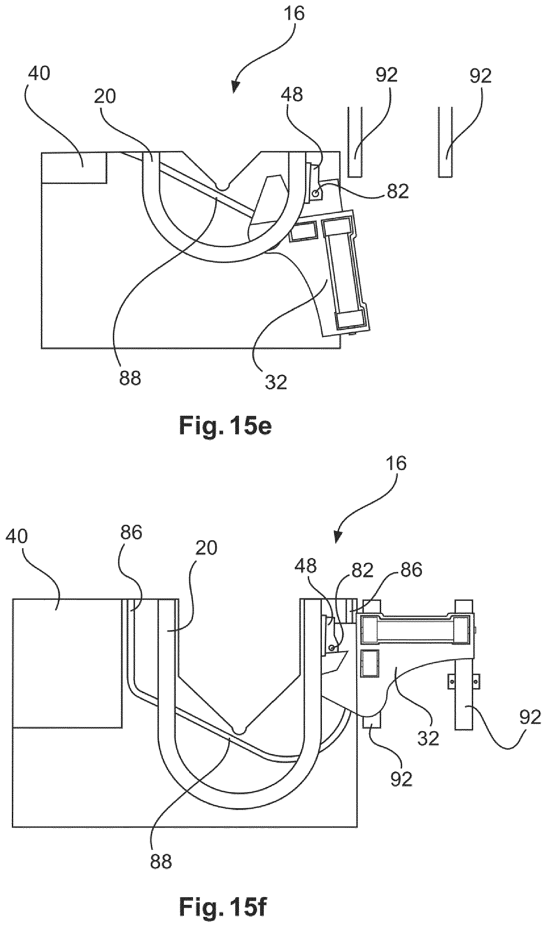

Ein Mitnehmer 32, welcher einen Kraftfahrzeugreifen 84 schleppt, ist am Ende der Förderstrecke 30 dargestellt (Fig. 15A), wobei die zweite Führungsrolle 68 kontaktfrei zu der Führungsbahn 86 angeordnet ist und diese in Förderrichtung überquert. Die Führungsbahn 86 ist entlang der Förderstrecke 30 außenseitig parallel zu der Förderkette 20 angeordnet, und im Bereich des Kettenrücklaufes 26 ist die Führungsbahn 86 ebenfalls außenseitig und parallel zu der Förderkette 20 angeordnet. Im Bereich der zweiten Umlenkvorrichtung 16 springt die Führungsbahn 86 nach innen zurück und kreuzt die Förderkette 20 und ist innenseitig der Förderkette 20 zum Kettenrücklauf 26 geführt, wobei in einem Anfangsbereich des Kettenrücklaufes 26 die Führungsbahn 86 die Förderkette 20 von innen nach außen quert, und außenseitig parallel zur Förderkette 20 weitergeführt ist. Durch die Profilierung 88 in Form einer Stufe unter Absenkung der Höhe der Führungsbahn 86 im Bereich der zweiten Umlenkvorrichtung 16 ist der Mitnehmer 32 durch die horizontale Verschwenkung um die Bohrungsachse 82 und die außenseitig auf der Führungsbahn 86 abrollende erste Führungsrolle 66 geführt. Dadurch kann ein entgegen der Förderrichtung gerichtetes horizontales Verschwenken des Mitnehmers 32 um die Bohrungsachse 82 (Fig. 15b-f) ermöglicht werden. Dadurch kann der Mitnehmer 32 kraftfrei den Wendepunkt in der zweiten Umlenkvorrichtung 16 durchlaufen. Durch das Ende der Profilierung 88 der Führungsbahn 86 zu Beginn des Kettenrücklaufes 26 erfolgt eine Führung des Mitnehmers 32 durch die außenseitig an der Führungsbahn 86 abrollende erste Führungsrolle 66, die wieder innenseitig an der Führungsbahn 86 abrollende zweite Führungsrolle 68, sowie das Kettenschloss 48. In dem Kettenrücklauf 26 sind die erste und zweite Laufrolle 36, 38 sowie die Stützrolle 50 jeweils auf Fahrstreifen 92 geführt.

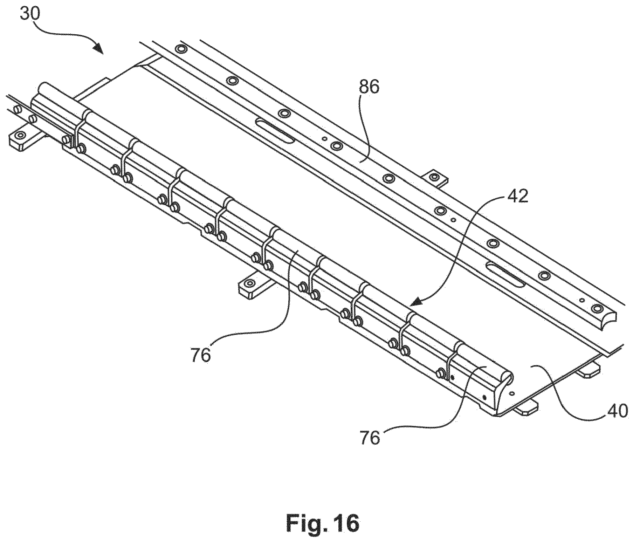

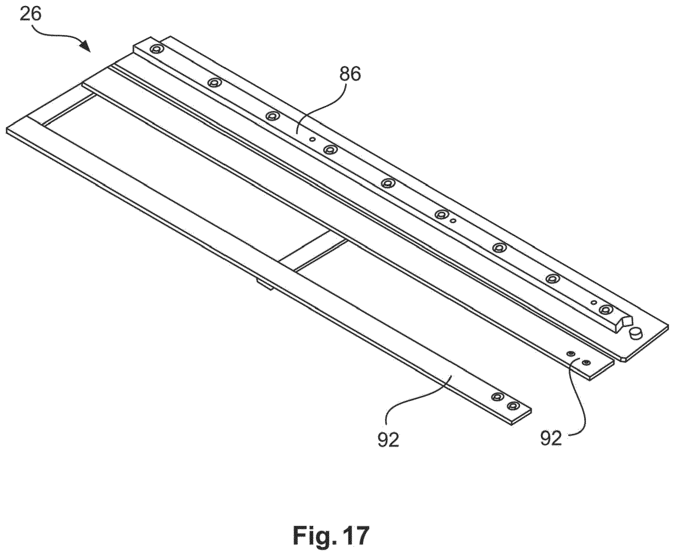

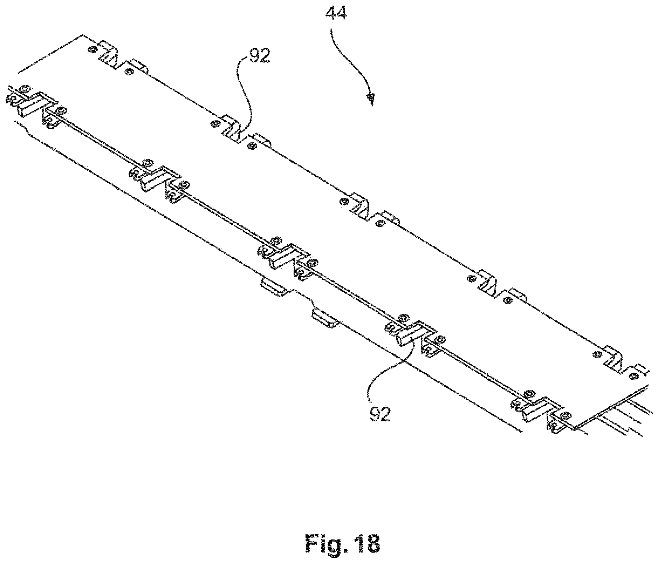

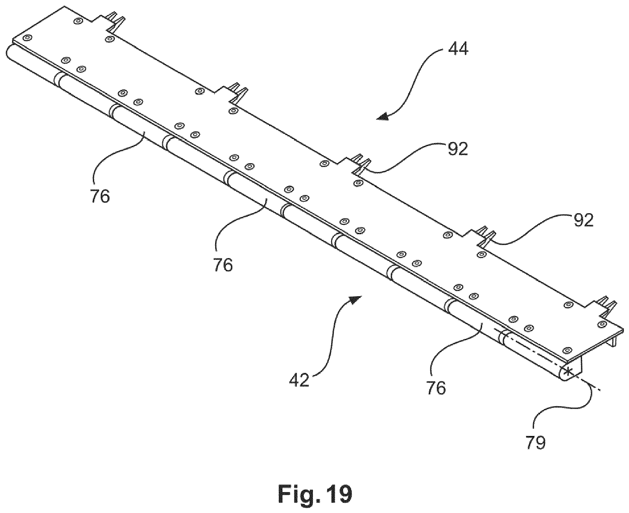

Fig. 16 zeigt ein Bauteil einer modular aufgebauten Förderstrecke 30. Die Fahrbahn 40 weist außenseitig einen Kragen auf, an welchem ein Felgenschutz 48 in Form von Schutzrollen 76 angeordnet ist. Innenseitig weist die Förderstrecke 30 einen Abschnitt der Führungsbahn 86 auf. Der Kettenrücklauf 26 (Fig. 17) weist jeweils außen- und innenseitig einen Fahrstreifen 92 für die Lauf- und Stützrollen (nicht dargestellt) des Mitnehmers auf. Innenseitig ist zudem ein Abschnitt der Führungsbahn 86 angeordnet. Die Schleppvorrichtung 10 kann zumindest teilweise (Fig. 18, Fig. 19) durch Abdeckungen 44 abgedeckt werden. Die Abdeckungen 44 können dabei Scharniere 92 aufweisen, wodurch die Abdeckungen 44, insbesondere die Abdeckung 44 der Förderstrecke 30 und des Kettenrücklaufes 26, klappbar ausgestaltet sind, um eine verbesserte Zugänglichkeit für Wartungs- und/oder Reparaturzwecke zu ermöglichen. Die Abdeckung 44 in Fig. 19 ist klappbar innenseitig an dem Fahrstreifen 30 angeordnet und weist einen Felgenschutz 42 auf, welcher in Form von benachbart und koaxial zueinander angeordneten Schutzrollen 76 ausgebildet ist. Die Schutzrollen 76 sind koaxial zu der Rollachse 79 angeordnet und weisen eine längliche Erstreckung auf, wodurch ein Kontakt mit einer Felge eines Kraftfahrzeugreifens durch Mitdrehen zu einer Vermeidung einer Beschädigung der Felge führt.

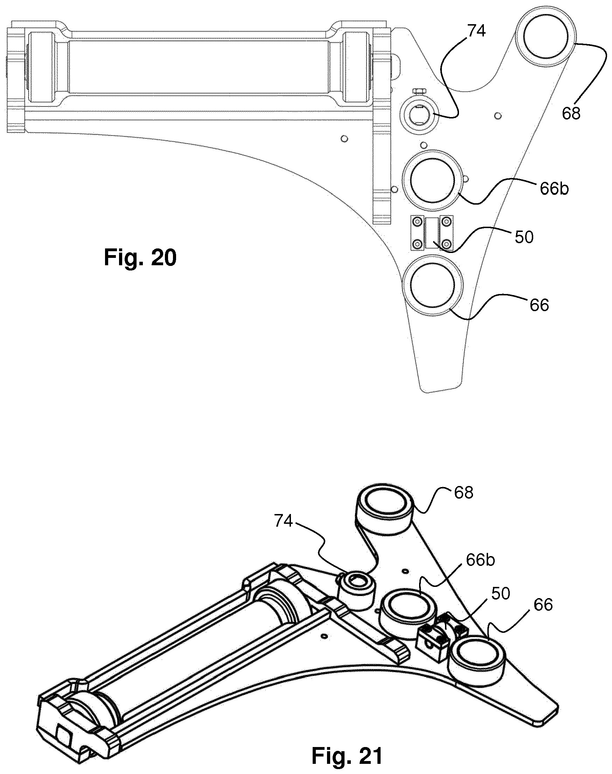

Fig. 20 zeigt einen Mitnehmer, welcher zur Führung des Mitnehmers neben einer ersten Führungsrolle 66 und eine zweiten Führungsrolle 68 eine weitere Führungsrolle 66b aufweist. Die Führungsrollen 66 und 66b sind in Förderrichtung der Förderkette (nicht dargestellt) hinter der Mitnehmerachse angeordnet, wobei die Führungsrolle 68 in Förderrichtung vor der Mitnehmerachse angeordnet ist. Die Führungsrolle 66 und 66b sind dabei außenseitig einer Führungsbahn (nicht dargestellt) angeordnet und die Führungsrolle 68 innenseitig der Führungsbahn. Zur Befestigung des Mitnehmers an einem Kettenschloss weist der Mitnehmer eine Bohrung 74 auf, in die ein Bolzen eines Kettenschlosses aufgenommen werden kann. Desweiteren weist der Mitnehmer eine Stützrolle 50 auf, welche zwischen den Führungsrollen 66 und 66b angeordnet ist.

Fig, 21 zeigt eine perspektivische Ansicht der in Fig. 20 gezeigten Ausgestaltung eines Mitnehmers, welcher zur Führung des Mitnehmers neben einer ersten Führungsrolle 66 und eine zweiten Führungsrolle 68 eine weitere Führungsrolle 66b aufweist. Die Führungsrollen 66 und 66b sind in Förderrichtung der Förderkette (nicht dargestellt) hinter der Mitnehmerachse angeordnet, wobei die Führungsrolle 68 in Förderrichtung vor der Mitnehmerachse angeordnet ist. Die Führungsrolle 66 und 66b sind dabei außenseitig einer Führungsbahn (nicht dargestellt) angeordnet und die Führungsrolle 68 innenseitig der Führungsbahn. Zur Befestigung des Mitnehmers an einem Kettenschloss weist der Mitnehmer eine Bohrung 74 auf, in die ein Bolzen eines Kettenschlosses aufgenommen werden kann. Desweiteren weist der Mitnehmer eine Stützrolle 50 auf, welche zwischen den Führungsrollen 66 und 66b angeordnet ist.

### Bezugszeichenliste

- 10: Schleppvorrichtung
- 12: erste Umlenkvorrichtung
- 14: erste Rotationsachse
- 16: zweite Umlenkvorrichtung
- 18: zweite Rotationsachse
- 20: Förderkette
- 22: Kettenvorlauf
- 24: Lasttrum
- 26: Kettenrücklauf
- 28: Leertrum
- 30: Förderstrecke
- 32: Mitnehmer
- 34: Mitnehmerrolle
- 36: erste Laufrolle
- 38: zweite Laufrolle
- 40: Fahrbahn
- 42: Felgenschutz
- 44: Abdeckung
- 46: Antriebseinheit - check
- 48: Kettenschloss
- 50: Stützrolle - check
- 52: Umlenkkettenrad
- 54: Hydraulikeinheit
- 56: Bolzen
- 58: Auskragung
- 60: Sicherungsschraube
- 62: Niet
- 64: Mitnehmerachse
- 66: erste Führungsrolle
- 68: zweite Führungsrolle
- 70: erste Führungsrollenachse
- 72: zweite Führungsrollenachse
- 74: Bohrung
- 76: Schutzrollen
- 78: Stützrollenachse
- 79: Rollachse
- 80: Schutzbügel
- 82: Bohrungsachse
- 84: Kraftfahrzeugreifen
- 86: Führungsbahn
- 88: Profilierung
- 90: Mitnehmerteller
- 92: Fahrstreifen
- 94: Scharnier

## Patentansprüche

1. Schleppvorrichtung für Kraftfahrzeuge, insbesondere für eine Waschanlage, mit einer zwischen einer ersten Umlenkvorrichtung (12) mit einer ersten Rotationsachse (14) und einer zweiten Umlenkvorrichtung (16) mit einer zweiten Rotationsachse (18) umlaufenden Förderkette (20) mit einem Kettenvorlauf (22) entlang eines Lasttrums (24) und einem Kettenrücklauf (26) entlang eines Leertrums (28), einer zumindest teilweise entlang des Lasttrums (24) angeordneten Förderstrecke (30) für Kraftfahrzeuge, mindestens einem, mit einem zugeordneten und an der Förderkette (20) angeordneten Kettenschloss (48) verbundenen Mitnehmer (32) für einen Kraftfahrzeugreifen (84) zum Schleppen eines Kraftfahrzeuges entlang der Förderstrecke (30), und einer umlaufenden Führungsbahn (86) zum Führen des mindestens einen Mitnehmers (32), wobei die erste und die zweite Rotationsachse (14,18) vertikal angeordnet sind, wobei der Lasttrum (24) und der Leertrum (28) der Förderkette (20) in einer horizontalen Ebene angeordnet sind, **dadurch gekennzeichnet, dass** die Schleppvorrichtung (10) einen Felgenschutz (42)aufweist, welcher in Form von Schutzrollen (76) ausgestaltet ist.

2. Schleppvorrichtung nach Anspruch 1, **dadurch gekennzeichnet, dass** die Führungsbahn (86) eine in senkrechter Richtung ausgebildete Profilierung (88) aufweist.

3. Schleppvorrichtung nach Anspruch 1 oder 2, **dadurch gekennzeichnet, dass** der Mitnehmer (32) mindestens eine Stützrolle (50) aufweist.

4. Schleppvorrichtung nach einem der vorherigen Ansprüche, **dadurch gekennzeichnet, dass** das Kettenschloss (48) einen Bolzen (56) zur verschwenkbaren Lagerung des Mitnehmers (32) und der Mitnehmer (32) eine entsprechende Bohrung (74) zur Aufnahme des Bolzens (56) aufweist.

5. Schleppvorrichtung nach einem der vorherigen Ansprüche, **dadurch gekennzeichnet, dass** die erste und/oder zweite Umlenkvorrichtung (12,16) einen Mitnehmerteller (90) zur vertikalen Abstützung des Mitnehmers (32) aufweist.

6. Schleppvorrichtung nach einem der vorherigen Ansprüche, **dadurch gekennzeichnet, dass** die erste Umlenkvorrichtung (12) einen hydraulischen Kettenspanner aufweist.

7. Schleppvorrichtung nach einem der vorherigen Ansprüche, **dadurch gekennzeichnet, dass** die Förderstrecke (30) eine Fahrbahn (40) für Kraftfahrzeugräder (84) aufweist.

8. Schleppvorrichtung nach einem der vorherigen Ansprüche, **dadurch gekennzeichnet, dass** entlang des Kettenrücklaufes (26) für die erste und zweite Laufrolle (36,38) und/oder die Stützrolle (50) des Mitnehmers (32) Fahrstreifen (92) vorgesehen sind.

9. Waschanlage mit mindestens einer Schleppvorrichtung (10) nach einem der Ansprüche 1 bis 8.

## Claims

1. Towing apparatus for motor vehicles, in particular for a car wash, including a conveyor chain (20) circulating between a first deflection device (12) having a first rotation axis (14) and a second deflection device (16) having a second rotation axis (18), wherein the conveyor chain (20) comprises a chain forward line (22) along a load strand (24) and a chain return line (26) along a slack strand (28);
a conveying line (30) for motor vehicles arranged at least partially along the load strand (24);
at least one driver (32) for a motor vehicle tire (84) comprising an associated chain joint (48) arranged at and connected to the conveyor chain (20) for towing a motor vehicle along the conveying line (30);
and a circumferential guide track (86) for guiding the at least one driver (32), wherein
the first and the second rotation axis (14, 18) are arranged vertically, wherein the load strand (24) and the slack strand (28) of the conveyor chain (20) are arranged in a horizontal plane;
**characterized in that**
the towing apparatus (10) comprises a rim protection element (42), which is configured in the form of protective rollers (76).

2. Towing apparatus according to claim 1, **characterized in that** the guide track (86) comprises a profiling (88) formed in the vertical direction.

3. Towing apparatus according to claim 1 or 2, **characterized in that** the driver (32) comprises at least one support roller (50).

4. Towing apparatus according to any one of the preceding claims, **characterized in that** the chain joint (48) comprises a bolt (56) for pivotally mounting the driver (32) and the driver (32) comprises a corresponding bore (74) for receiving the bolt (56).

5. Towing apparatus according to any one of the preceding claims, **characterized in that** the first and/or the second deflection device (12, 16) comprises a driver plate (90) for vertical supporting the driver (32).

6. Towing apparatus according to any one of the preceding claims, **characterized in that** the first deflection device (12) comprises a hydraulic chain tensioner.

7. Towing apparatus according to any one of the preceding claims, **characterized in that** the conveyor line (30) comprises a lane (40) for motor vehicle wheels (84).

8. Towing apparatus according to any one of the preceding claims, **characterized in that** tracks (92) are provided for the first and the second roller (36, 38) and/or the support roller (50) of the driver (32) along the chain return line (26).

9. Car wash comprising at least one towing apparatus (10) according to any one of claims 1 to 8.

## Revendications

1. Dispositif de remorquage pour véhicules automobiles, en particulier, pour une installation de lavage, avec une chaîne de transport (20) effectuant un parcours entre un premier dispositif de renvoi (12) avec un premier axe de rotation 14) et un deuxième disposition de renvoi (16) avec un deuxième axe de rotation (18), avec un première avancée de chaîne (22) le long d'un brin de charge (24) et un retour de chaîne (26) le long d'un brin à vide (28), un parcours de transport (30) destiné à des véhicules automobiles, disposé au moins partiellement le long du brin de charge (24), au moins un système d'entraînement (33), associé et relié à un maillon raccord (48) disposé sur la chaîne de transport (20), pour un pneu de véhicule automobile (84), en vue du remorquage d'un véhicule automobile le long du parcours de transport (30), et une bande de guidage (86) circonférentielle pour le guidage de l'au moins un système d'entraînement (32),
où les premier et deuxième axes de rotation (14, 18) sont disposés verticalement, où le brin de charge (24) et le brin à vide (28) de la chaîne de transport (20) sont disposés dans un plan horizontal, **caractérisé en ce que** le dispositif de remorquage (10) présente un dispositif de protection de jante (42), lequel est conçu sous la forme de rouleaux de protection (76) .

2. Dispositif de remorquage selon la revendication 1, **caractérisé en ce que** la bande de guidage (86) présente un profilage (88) formé dans la direction verticale.

3. Dispositif de remorquage selon la revendication 1 ou 2, **caractérisé en ce que** le système d'entraînement (32) présente au moins un rouleau d'appui (50).

4. Dispositif de remorquage selon l'une des revendications précédentes, **caractérisé en ce que** le maillon raccord (48) présente un boulon (56) pour le positionnement pivotable du système d'entraînement (32), et le système d'entraînement (32) présente un alésage (74) correspondant pour l'admission du boulon (56).

5. Dispositif de remorquage selon l'une des revendications précédentes, **caractérisé en ce que** le premier et/ou le deuxième dispositif de renvoi (12, 16) présente un évidement pour le système d'entraînement (90) pour l'appui vertical du système d'entraînement (32).

6. Dispositif de remorquage selon l'une des revendications précédentes, **caractérisé en ce que** le premier dispositif de renvoi (12) présente un tendeur de chaîne hydraulique.

7. Dispositif de remorquage selon l'une des revendications précédentes, **caractérisé en ce que** le parcours de transport (30) présente une piste de roulement (40) pour des roues de véhicule automobile (84).

8. Dispositif de remorquage selon l'une des revendications précédentes, **caractérisé en ce que**, le long du retour de chaîne (26), des bandes de roulement (92) sont prévues pour les premier et deuxième rouleaux de roulement (36, 38) et/ou le rouleau d'appui (5) du système d'entraînement (32).

9. Installation de lavage avec au moins un dispositif de remorquage (10) selon l'une des revendications 1 à 8.
